Europäisches Patentamt

European Patent Office

Office européen des brevets

(19)

(11) Publication number: **0 103 414**
**A2**

(12) # EUROPEAN PATENT APPLICATION

(21) Application number: **83304684.0**

(22) Date of filing: **12.08.83**

(51) Int. Cl.³: **H 02 G 3/06**

(30) Priority: **13.08.82 GB 8223376**

(43) Date of publication of application: **21.03.84**
**Bulletin 84/12**

(84) Designated Contracting States: **AT BE CH DE FR GB IT LI LU NL SE**

(71) Applicant: **GILFLEX-KEY LIMITED, Old's Approach Tolpits Lane, Watford Hertfordshire WD1 8XT (GB)**

(72) Inventor: **Cheetham, Colin R., Yewlands, Hoddesdon Hertfordshire EN11 8BU (GB)**

(74) Representative: **Warden, John Christopher et al, R.G.C. Jenkins & Co. 12-15, Fetter Lane, London EC4A 1PL (GB)**

(54) **Junction pieces for electric conduit.**

(57) Junction pieces (110) for joining electric cable conduit are made from mouldable plastics material in the traditional shapes of elbows, small bends, and «T» junctions and comprise a base portion (100) with sockets (130) for receiving the cable conduit at each end, and a cover portion (140). The base portion (100) is cut-away in the middle to provide access for inspection of the cable and to facilitate manipulation of the conduit when inserting it into the junction piece (110). The cover portion (140) fits over the cut-away part of the base portion (100) and is retained on the base portion by snap engagement means (123, 143). When in place, the cover (140) fits flush with the top and sides of the sockets (130).

0103414

- 1 -

## JUNCTION PIECES FOR ELECTRIC CONDUIT

This invention relates to conduits for electrical cable. In particular, it relates to junction pieces for joining ends of conduits, e.g. at corners, and having removable covers to enable ease of fitting and inspection of the electric cables contained in the conduit.

Such junction pieces are constructed as "elbows", "small bends" (having a larger bend radius than an "elbow"), and "T" junctions, and were originally made of cast iron. To enable inspection of the electric cable and to manipulate the cable when inserting the cable, a flat, plate-like lid portion was provided, which was fitted over an opening in the main portion by means of screws. More recently these junction pieces have been made of plastics material, using similar screwed inspection plates. To fit or inspect the cables, therefore, a time consuming

0103414

(and therefore costly) unscrewing of the plates is
involved. Also, the inclusion of metallic screws can
add an undesirable electric conducting path through the
material of the fitting. In addition, there is the
further disadvantage that screws can be dropped and
subsequently lost. The inspection plates could therefore be inadequately secured for a period of time until
replacement screws were fixed. Replacement screws
might well not be of the correct size, resulting in
deterioration of the thread. The whole junction piece
would eventually have to be replaced much earlier than
would otherwise be necessary due to inadequate securement and permanent damage to the inspection cover.

This present invention is aimed at overcoming these
disadvantages.

In accordance with the invention there is provided
a junction piece for cable conduits comprising A    a base portion including

(a) a plurality of sockets of continuous cross section
formed to receive the ends of conduit sections;

(b) a central connecting portion connecting the
sockets and having at least one part of channel
shape with an open wall section, means defining a
seating plane opposite to the open wall section; and

B    a separate cover portion of channel section, arranged to fit over the channel part of the base portion to co-operate with the base portion to define a passageway generally aligned with the sockets;

the parts A and B being formed to interengage by snap action.

The cover may comprise side wall portions which engage over side wall portions of the connecting portion. These side wall portions may have generally parallel outer surfaces.  A part of the connecting portion immediately adjacent the sockets may extend around an upper part of each socket as a recessed shoulder so that at least part of the exterior surface of the cover (when fitted) lies substantially flush with part of the exterior surface of the sockets.

The seating plane may be defined by the bottom surface of the side walls and end walls of the connecting portion or by one or more projections from a bottom wall of the channel part of the connecting portion.  In one embodiment the seating plane is defined by the bottom surface of a limb which projects from a bottom wall of the channel part of the connecting portion.

In the elbows and small bends, there are two sockets connected by an angled channel in the form of a corner piece, the two sockets being substantially at right angles.   An alternative embodiment has three sockets connected by channels and is in the form of a "T" piece.

Preferably, the junction piece of the invention is made from a mouldable plastics material, and in particular from PVC.

Embodiments of the invention are hereafter described with reference to the accompanying drawings in which:

Figure 1 is a perspective view of an "elbow" junction piece in accordance with the invention;

Figure 2 is an end view of the "elbow" of Figure 1;

Figure 3 is a sectional view of the "elbow" of Figure 1 taken along the line III-III;

Figure 4 is a perspective view of the "elbow" of Figure 1 with the cover in a removed position;

Figure 5 is a perspective view of a "small bend" junction piece, in accordance with the invention, with the cover in a removed position;

Figure 6 is an end view of the "small bend" of Figure 5;

Figure 7 is a sectional view (similar to Figure 3) of the "small bend" of Figure 5;

Figure 8 is a top plane view of a "T" junction piece in accordance with the invention;

Figure 9 is a plan view from underneath the "T" piece of Figure 8;

Figure 10 is an end view from the stem portion of the "T" piece of Figure 8;

Figure 11 is a sectional view of the "T" piece of Figure 8 taken through the line XI-XI; and

Figure 12 is a perspective view of the "T" piece of Figure 8 with the cover in a removed position.

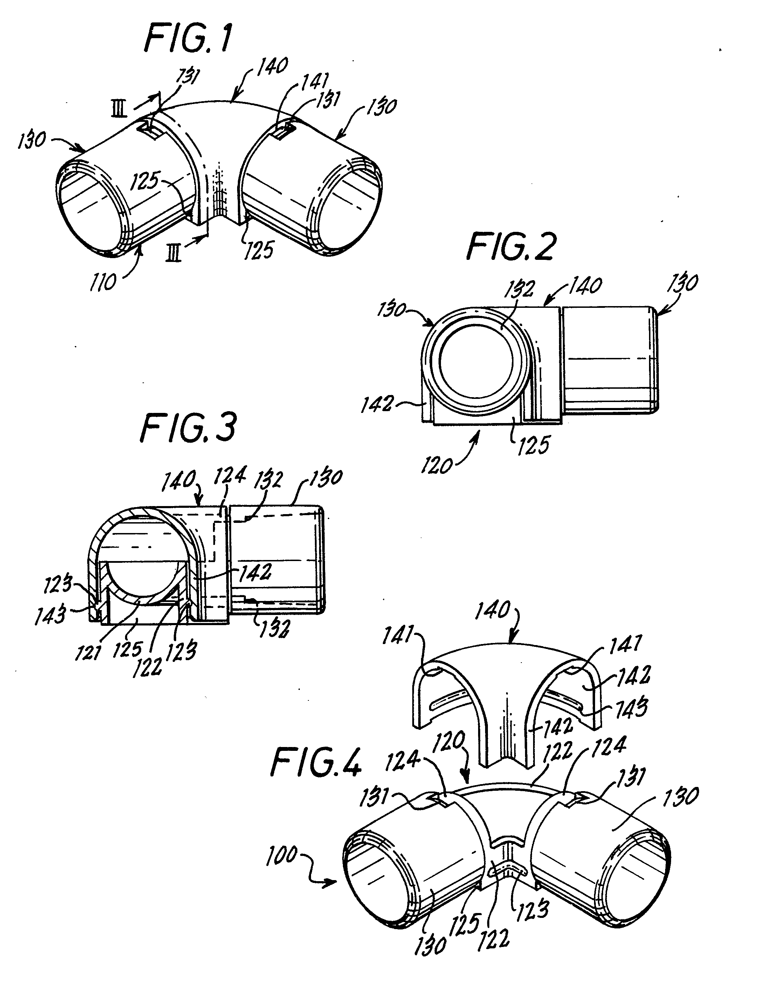

Figures 1 to 4 show at 110 a junction piece in the form of an elbow comprising a base portion 100 (Figure 4) which comprises two sockets 130 connected at right angles one to the other by a central connecting portion 120 which provides with a cover 140 a generally cylindrical duct aligned with, and of substantially the same cross-sectional area and shape as, the interior of the sockets 130.

The sockets 130 have generally cylindrical inner and outer surfaces. To provide a friction fit with the conduit sections which they are designed to receive, the inner surfaces of the sockets are provided with friction fitting means which comprise a slight inward taper of the sockets and "flats" or shallow ribs which taper with the general socket taper. The conduit sections are preferably held in place with adhesive, e.g. a solvent weld adhesive.

To prevent the conduit sections being inserted too far, a stop means in the form of a radially extending internal shoulder 132 is provided in the internal surfaces of the sockets 130 near their inner ends. At the junction between the sockets 130 and the central connecting portion, there is formed an axially extending cylindrical shoulder 124 recessed from the outer surface of each socket 130 to a depth substantially equal to the thickness of the material of the cover 140, so that when the cover is in place, as shown in Figure 1, its outer surface lies flush with, or generally continues in alignment with, the outer surfaces of the adjacent sockets 130 as far as the central diametric plane.

The central connecting portion 120 comprises a channel part 121 of semicircular cross-section which extends through the right angle. Side walls 122 extend from the upper edges of the channel part 121 to define with end walls 125 a planar seating surface at their surfaces remote from the channel opening. The outer surfaces of the end walls 125 extend from the axially outer extremeties of the shoulders 124, as shown in

/
/

Figure 4, and the parallel outer surfaces of the side walls 122 provide engagement surfaces for the cover 140.

The cover 140 also extends through a right angle to fit over the central connecting portion 120. It comprises side walls 142 which engage over the side walls 122 of the central connecting portion 120 to a position short of the seating plane surface defined by the bottom surfaces of the walls 122, 125. The cover 140 is adapted to be engaged with the base portion 100 by snap engagement. This is enabled by projecting ridges 123 extending along portions of the outer surfaces of the side walls 122 which engage in grooves 143 in the inner surfaces of the walls 142 of the cover 140.

To facilitate removal of the cover 140, recesses 131, having a sloping floor, are provided at the top of the sockets, leading to the shoulder 124, to allow access for a lever such as a screwdriver. Complementary recesses 141 are provided in the upper inner surfaces of the cover 140.

As shown particularly in Figure 3, when the cover is fitted in place upon the base portion, the curved interior surfaces of the cover 140 and the channel part 121 provide a generally circular sectioned passageway continuing on a common axis from one socket to the other.

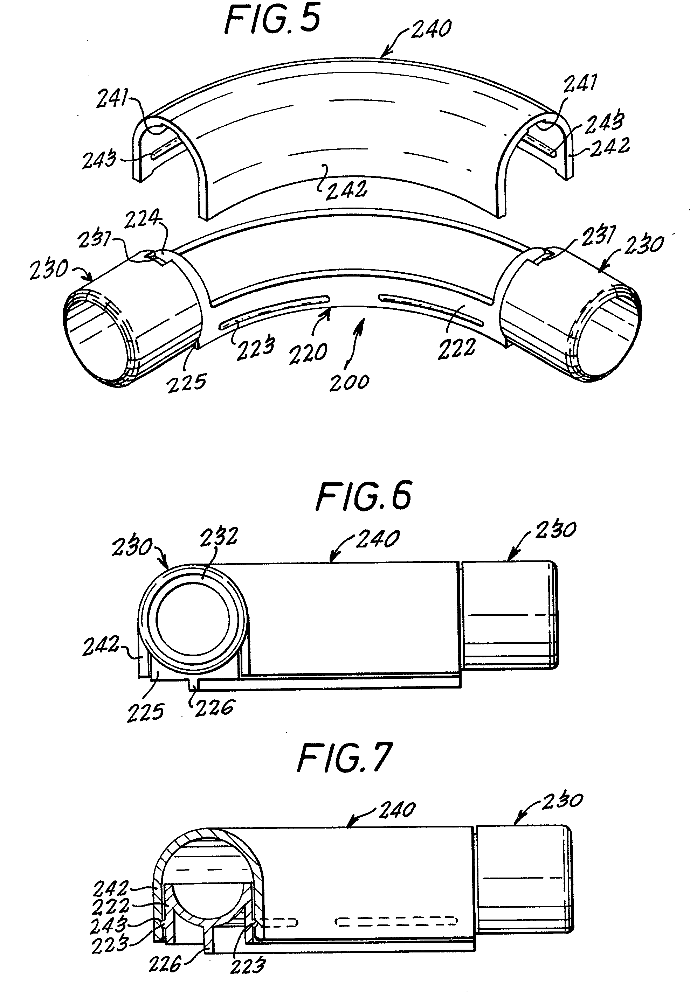

Figures 5 to 8 show a junction piece in the form of a small bend. This embodiment is very similar to the first embodiment with two sockets being substantially at right angles to each other; the radius of bend is much larger, however. Equivalent features to those in the first embodiment shown in Figures 1 to 4 are identified by the same last two digits prefixed by 2 instead of 1.

The main distinction between the two embodiments, apart from the size and radius of bend, is that the seating plane of the latter embodiment is defined by the bottom surface of a limb 226 which extends along the length of the central connecting portion 220 (Figure 6) from the convex bottom surface of the channel part 221 and beyond the bottom surfaces of the side walls 222 and end walls 225 of the central connecting portion which are thereby raised from the wall surface against which the conduits are seated.

A further distinction is that the additional and more extensive ridges 223 and grooves 243 are provided.

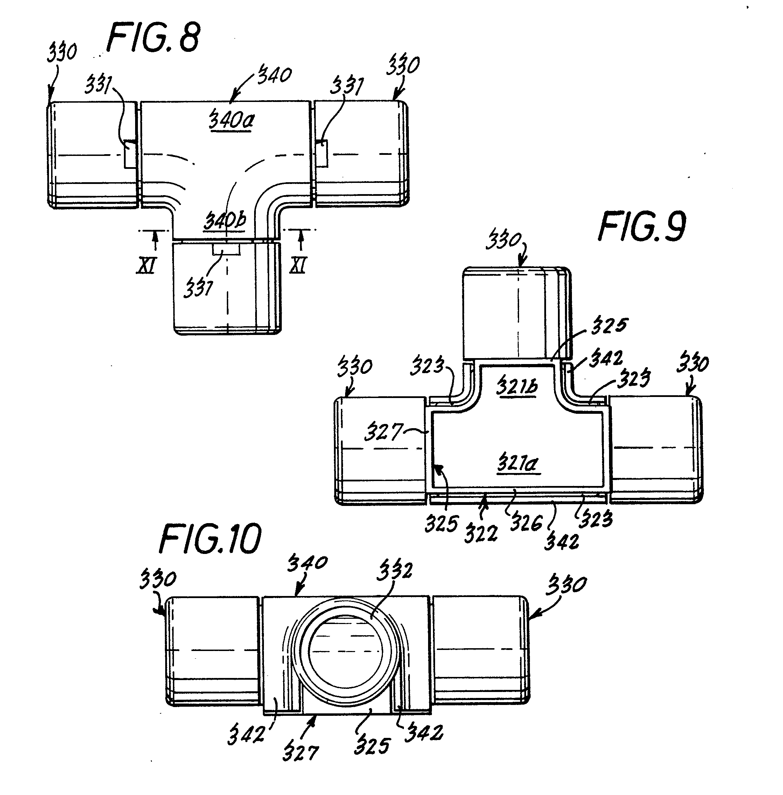

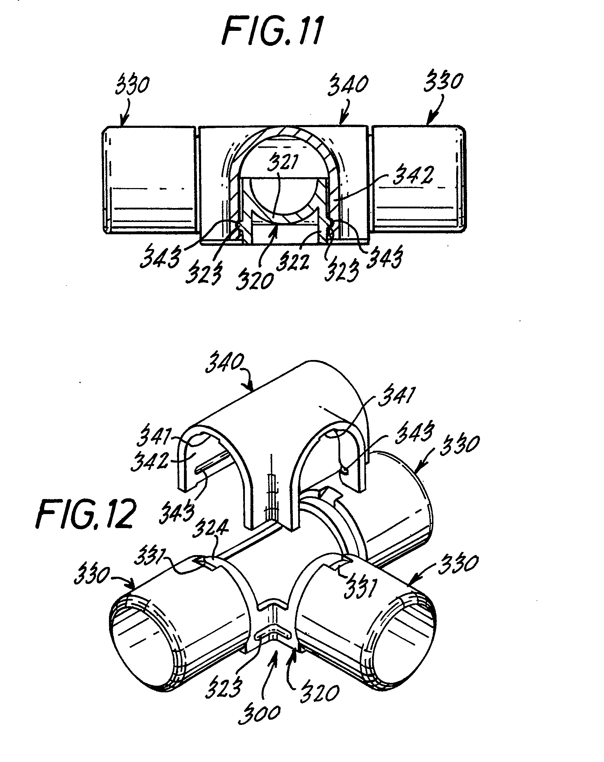

The third embodiment, shown in Figures 8 to 12, is a "T" junction piece, and features similar to those in the first two embodiments are prefixed by the numeral 3 instead of 1 or 2.

The channel part 321 of the central connecting portion 320 can be considered to include a straight cross piece 321a and a straight stem piece 321b which joins the cross piece 321a substantially in the middle of the cross piece. Sockets 330 are disposed at each end of the channel pieces of the central connecting portion. The channel pieces interconnect to provide a duct between any two sockets. The portion 340a of the cover 340 corresponding to the cross piece 321a is of 'U' shape cross section, and the portion 340b corresponding to the stem portion 321b is similarly 'U' shaped, joining the cross piece portion of the cover 321a substantially in the middle. When in place, therefore, the cover 340 provides with the base portion 300 a passageway of substantially circular cross-section between any two sockets.

As can be seen in Figure 9, the seating plane is defined in this embodiment by the bottom surfaces 326 of the side walls 322 and the bottom surfaces 327 of the

- 10 -

0103414

of the end walls 325 of the central connecting portion 320.

As in the previously described embodiments, the ridges 323 of the snap engagement means between the cover 340 and base portion 300 are disposed along the outer surfaces of the side walls 322 of the channel part 321, and the corresponding grooves 343 are disposed along the inner surfaces of the cover 340. Recesses 331 are also provided in the top outer surface of the sockets 330 with complementary recesses 341 in the upper inner surface of the cover 340 adjacent the recesses 331, to permit access of a lever between the cover 340 and base portion 300.

It will be appreciated that a number of variations can be made to the embodiments described within the scope of the invention. For example, snap engagement means other than that described could be used, such as overlapping lips, or a combination of slot and lip.

It should be noted that although junction pieces of traditional form have been described, such as "elbow", "small bend" and "T", other forms of junction pieces could be made within the scope of the invention.

0103414

CLAIMS:

1.    A junction piece (110) for cable conduits
A    comprising a base portion (100) including

(a)    a plurality of sockets (130) of continuous
cross section formed to receive the ends of
conduit sections;

(b)    a central connecting portion (120) connecting
the sockets (130) and having at least one part
(121) of channel shape  with an open wall
section, and means (122, 125) defining a
seating plane opposite to the open wall
section; and

B    a separate cover portion (140) of channel section,
arranged to fit over the channel part (121) of the
base portion (100) to cooperate with the base
portion (100) to define a passageway generally
aligned with the sockets (130);

the parts A and B being formed to interengage by snap
action.

2.    A junction piece (110) according to claim 1
in which the cover (140) comprises side wall portions
(142) which engage over side wall portions (122) of the
connecting portion (120).

3. A junction piece (110) according to claim 2 in which the side wall portion (122) of the central portion (120) have generally parallel outer surfaces.

4. A junction piece (110) according to any preceding claim in which a part of the connecting portion (120) immediately adjacent the sockets (130) extends around an upper part of each socket (130) as a recessed shoulder (124) so that at least part of the exterior surface of the cover (140) (when fitted) lies substantially flush with part of the exterior surface of the sockets (130).

5. A junction piece (110) according to any preceding claim in which the bottom surface of the side walls (122) and end walls (125) of the connecting portion (120) define the seating plane.

6. A junction piece (210) according to any of claims 1 to 4 in which the seating plane is defined by one or more projections (226) from a bottom wall of the channel part (221) of the connecting portion (220).

7. A junction piece (110) according to any preceding claim in the form of a corner piece having two sockets (130) substantially at right angles.

0103414

8.   A junction piece (310) according to any of claims 1 to 6 in the form of a "T" piece.

9.   A junction piece (110) according to any preceding claim which is made from a mouldable plastics material.

## FIG.1

## FIG.2

## FIG.3

## FIG.4

**FIG.5**

**FIG.6**

**FIG.7**

FIG.8

FIG.9

FIG.10

## FIG.11

330  340  330

321

342

343  323  320  322  323  343

## FIG.12

340

341

341

342

343  343

324

330

331

331  330

330

323  320

300